# FASCICULE DE BREVET EUROPEEN

(11) **EP 2 104 621 B1**
(45) Date de publication et mention de la délivrance du brevet: **07.12.2011**
(21) Numéro de dépôt: 07872015.8
(22) Date de dépôt: 21.12.2007
(51) Int. Cl.: B60Q 1/04

(54) **BLOC OPTIQUE DE VEHICULE AUTOMOBILE**
BELEUCHTUNGSEINHEIT FÜR EIN KRAFTFAHRZEUG
MOTOR VEHICLE LIGHTING UNIT

(30) Priorité: 22.12.2006 FR 0611331
(43) Date de publication de la demande: 30.09.2009
(73) Titulaire: Compagnie Plastic Omnium, 69007 Lyon (FR)
(72) Inventeur: FAYT, Arnold, F-01640 Jujurieux (FR); CHERON, Hugues, F-01800 Meximieux (FR); ROCHEBLAVE, Laurent, F-69100 Villeurbanne (FR)
(74) Mandataire: Remy, Vincent Noel Paul
(86) Numéro de dépôt international: PCT/FR2007/052605
(87) Numéro de publication internationale: WO 2008/087347

(56) Documents cités:
- EP-A- 1 529 685
- EP-A- 1 645 799
- WO-A-00/07844

## Description

La présente invention concerne un bloc optique de véhicule automobile adapté pour le traitement du choc piéton.

Lors d'un tel choc, la hanche ou la tête du piéton peut heurter violemment l'avant du véhicule au voisinage du bloc optique, ce qui engendre une forte sollicitation dans la direction longitudinale du véhicule ou la direction verticale. Le bloc optique étant une pièce globalement rigide du véhicule automobile, la tête ou la hanche du piéton heurtant celui-ci subit une décélération brutale, le piéton pouvant alors être victime de graves lésions dues à cette décélération.

Un bloc optique selon le préambule de la revendication 1 est connu de EP1529685.

On connaît, dans l'état de la technique, un bloc optique comprenant un boîtier d'optique rigide. On entend par « boîtier d'optique » un boîtier fermé par le vitrage optique de façon à délimiter un compartiment étanche pour contenir les éléments fonctionnels de l'optique, tels que la source lumineuse, etc.

Pour traiter le choc piéton, on sait qu'il existe un boîtier d'optique, muni de fixations à une partie structurelle du véhicule automobile, les fixations étant fusibles lorsqu'elles reçoivent une forte sollicitation dans une direction donnée.

Ces fixations fusibles permettent d'assurer l'enfoncement du bloc optique dans la direction donnée, par exemple la direction verticale dans le cas d'un choc tête, consécutivement à un tel choc. Le bloc optique subissant cet enfoncement accompagne donc sur une certaine distance la tête du piéton qui, de ce fait, décélère progressivement sur cette distance. La décélération de la tête du piéton, lorsqu'elle heurte un point dur du véhicule automobile, est par conséquent moins brutale, ce qui permet de diminuer la gravité des blessures du piéton.

Cette solution peut être satisfaisante dans le cas de bloc optique de petites dimensions. Toutefois, un bloc optique de grandes dimensions, généralement utilisé pour un véhicule de catégorie supérieure, est relativement lourd (jusqu'à six kilos). Les fixations du bloc optique à la partie structurelle du véhicule, bien que fusibles, doivent être aptes à maintenir durablement le bloc optique dans des conditions normales d'utilisation du véhicule et donc pour être relativement rigides.

Ainsi, lors du choc piéton, un effort important est nécessaire pour rompre les fixations et permettre le déplacement du bloc optique. La décélération subie par le piéton pour provoquer la rupture des fixations est alors relativement importante et celui-ci peut alors être blessé durant la phase de rupture des fixations.

L'invention a pour but de remédier à ces inconvénients en fournissant un bloc optique permettant, quelles que soient ses dimensions, d'assurer une bonne sécurité du piéton lors d'un choc, tout en assurant convenablement le maintien du bloc optique sur le véhicule.

A cet effet, l'invention a pour objet un bloc optique de véhicule automobile, comprenant un boîtier d'optique comportant une partie inférieure rigide. Le bloc optique comporte également une zone déformable, cette zone comportant une partie supérieure du boîtier d'optique déformable lorsqu'elle est soumise à une sollicitation équivalente à une sollicitation engendrée par un choc piéton.

Déformer seulement une partie du bloc optique engendre en effet un effort moindre sur la tête du piéton que le déplacement de la totalité du bloc. Le choc avec le bloc optique selon l'invention est donc moins violent, et la décélération de la tête du piéton moins brutale. Ainsi, le piéton n'est pas susceptible d'être victime de lésions graves, le déplacement de la zone déformable du bloc optique étant progressif et ayant lieu dès le début du choc, contrairement au cas des fixations fusibles fixées à la caisse. En outre, la course potentielle de la tête du piéton est augmentée, ce qui permet de diminuer les risques de blessures lors de la rencontre avec un point dur, car, plus la course est importante, plus la vitesse de la tête du piéton diminue, notamment du fait de la rencontre avec des éléments absorbeurs d'énergie tout au long de la course.

De plus, le déplacement du bloc optique dans son ensemble n'étant plus requis, il n'est pas nécessaire de laisser un dégagement important sous le bloc optique. Le bloc optique selon l'invention permet donc plus de flexibilité dans l'agencement des différents éléments du bloc avant. En outre, il ne détériore pas, lors d'un choc, tous les éléments qui se trouvent à son voisinage. Ainsi, les réparations effectuées sur le véhicule après un choc piéton sont moins nombreuses et moins coûteuses. En particulier, les points de fixation du bloc optique à la structure du véhicule demeurent intacts.

Par ailleurs, dans le cas d'un bloc optique muni de fixations fusibles à une partie structurelle du véhicule, il est complexe de traiter sur un même bloc optique à la fois les chocs tête et hanche. En effet, de tels blocs nécessitent des fixations fusibles en X (pour traiter le choc hanche) et en Z (pour le choc tête). Dans ce cas, les fixations ne sont plus assez solides et peuvent se rompre lors de sollicitations minimes. En revanche, la zone déformable du bloc optique selon un aspect avantageux de l'invention est apte à se déformer aussi bien lors d'un choc tête que lors d'un choc hanche, le bloc optique étant malgré tout convenablement maintenu sur le véhicule. En effet, la partie avant de la zone déformable pour le choc tête peut être heurtée et, par conséquent, déformée par la hanche d'un piéton renversé par le véhicule automobile, le traitement du choc hanche et du choc tête étant alors pris en charge par une même zone du bloc optique.

Le bloc optique comprend également les caractéristiques suivants:
- la partie supérieure du boîtier d'optique comprend la paroi supérieure de ce boîtier;
- la paroi supérieure comprend au moins une zone d'amorce de rupture, notamment une striction d'épaisseur. Ainsi, on peut facilement programmer l'effort à partir duquel la partie supérieure va se déformer sans blesser le piéton. On peut en outre définir précisément la zone de déformation ;
et préférentiellement l'une des caractéristiques suivantes :
- la partie supérieure du boîtier d'optique est réalisée en un matériau souple, c'est-à-dire déformable élastiquement lorsqu'il est soumis à une sollicitation équivalente à une sollicitation engendrée par un choc piéton. La tête du piéton heurtant le véhicule au voisinage du bloc optique est apte à déformer la partie supérieure du bloc optique sans fournir trop des efforts importants, et, par conséquent, sans subir une décélération trop brusque. Une telle partie supérieure permet en outre une réparation plus facile du bloc optique suite au choc et ne nécessitant notamment pas le changement du boîtier, voiré aucune réparation ;
- la partie supérieure du boîtier d'optique est d'épaisseur moindre que la partie inférieure. Ainsi, une telle partie a une rigidité diminuée de sorte qu'elle suffit à étanchéifier le boîtier sans constituer un point dur de celui-ci. En outre, cette partie peut être réalisée dans le même matériau que la partie inférieure du boîtier d'optique, ce qui permet une fabrication plus simple de ce boîtier, notamment par moulage. Dans ce cas, la partie supérieure se déforme plastiquement lors d'un choc piéton, alors que la partie inférieure, rigide et pouvant présenter un danger pour le piéton, demeure intacte et n'est pas susceptible de rencontrer la tête du piéton ;
- la zone déformable est conformée pour autoriser une course d'une tête d'un piéton sur une distance comprise entre 20 et 50 mm, de préférence 30 à 40 mm. Cette course est en effet suffisante pour éviter que le piéton soit victime de lésions graves ;
- la zone déformable comprend un dégagement disposé sous la partie supérieure du boîtier d'optique, permettant à la partie supérieure de se déformer sans rencontrer de résistance de la part des pièces rigides contenues dans le boîtier ;
- la zone déformable comprend au moins une pièce fusible disposée sous la partie supérieure du boîtier d'optique. Ainsi, si le bloc optique ne comprend pas un dégagement dans la zone que la tête du piéton risque d'heurter ou si le dégagement n'est pas suffisant, on prévoit de placer dans cette zone, qui correspond dans l'invention à la zone nommée « déformable », uniquement les pièces peu rigides, susceptibles de se rompre, pour ne pas gêner la déformation de la partie supérieure du boîtier d'optique ;
- la zone déformable comprend un masque, destiné à améliorer l'aspect du bloc optique et comportant de préférence au moins une zone d'amorce de rupture dans sa partie supérieure. Le masque est en effet susceptible, pour des raisons esthétiques, de ne pas pouvoir être déplacé hors de la zone que la tête du piéton risque de heurter. Le masque est une pièce fusible, qui ne gêne donc pas le déplacement de la partie supérieure du bloc optique et, si besoin, la zone d'amorce de rupture permet de le rendre fusible pour un seuil encore inférieur, de manière à faciliter encore la déformation de la partie supérieure du boîtier d'optique ;
- la zone déformable comprend au moins une pièce escamotable dans la zone déformable. Ainsi, si des pièces, telles qu'un module optique mobile, trop rigides pour être déformables, se trouvent dans la zone déformable, ces pièces sont conformées pour sortir de la zone déformable lors d'un choc, de façon à ne pas gêner la déformation de la paroi et blesser le piéton ;
- le bloc optique comprend un module optique mobile, comportant une source lumineuse de forte puissance et un support comportant des moyens réglables de positionnement de la source lumineuse, le module optique mobile étant relié à la partie inférieure du boîtier d'optique. Ce module optique mobile est en effet massif et rigide et son maintien nécessite des fixations solides à un support rigide. Ainsi, relier ce module optique mobile à la partie inférieure du boîtier d'optique permet de libérer la partie supérieure du boîtier. Il en ressort que cette partie supérieure n'est pas une partie structurelle du boîtier et peut être moins rigide et, par conséquent, plus facilement conçue pour optimiser le choc piéton ;
- le boîtier d'optique comprend au moins un moyen de fixation à une partie structurelle du véhicule, chaque moyen de fixation étant situé dans la partie inférieure du boîtier d'optique. De même, cela permet de libérer la partie supérieure du boîtier de sa fonction structurelle ;
- le boîtier d'optique est relié au vitrage d'optique par l'intermédiaire d'un joint souple appliqué sur la périphérie du boîtier d'optique, à l'avant de celui-ci. Un tel joint permet de garder des jeux et affleurements optimaux entre le vitrage d'optique et la carrosserie du véhicule, même si les fixations du bloc optique à la caisse ont été toutes déplacées sur la partie inférieure du boîtier d'optique ;
- le boîtier d'optique comprend des moyens de renfort de sa partie inférieure, notamment un bras de soutien de la partie inférieure du boîtier d'optique, de préférence venu de moulage avec le boîtier ;
- le bloc optique est d'un seul tenant avec un support d'aile, comprenant des moyens d'absorption destinés à être agencés au voisinage du longeron supérieur du véhicule automobile. Un tel support d'aile permet de mieux positionner les différents éléments les uns par rapport aux autres et d'améliorer le traitement du choc piéton sur toute la longueur du bloc avant.

L'invention sera mieux comprise à la lecture de la description qui va suivre, donnée uniquement à titre d'exemple et faite en se référant aux dessins dans lesquels :
- la figure 1 est un schéma en vue latérale d'un bloc avant de véhicule automobile comprenant un bloc optique selon l'invention ;
- la figure 2 est une vue en coupe d'un bloc optique selon un mode de réalisation de l'invention ;
- la figure 3 est une vue en coupe du bloc optique de la figure 2 soumis à un choc avec la tête d'un piéton ;

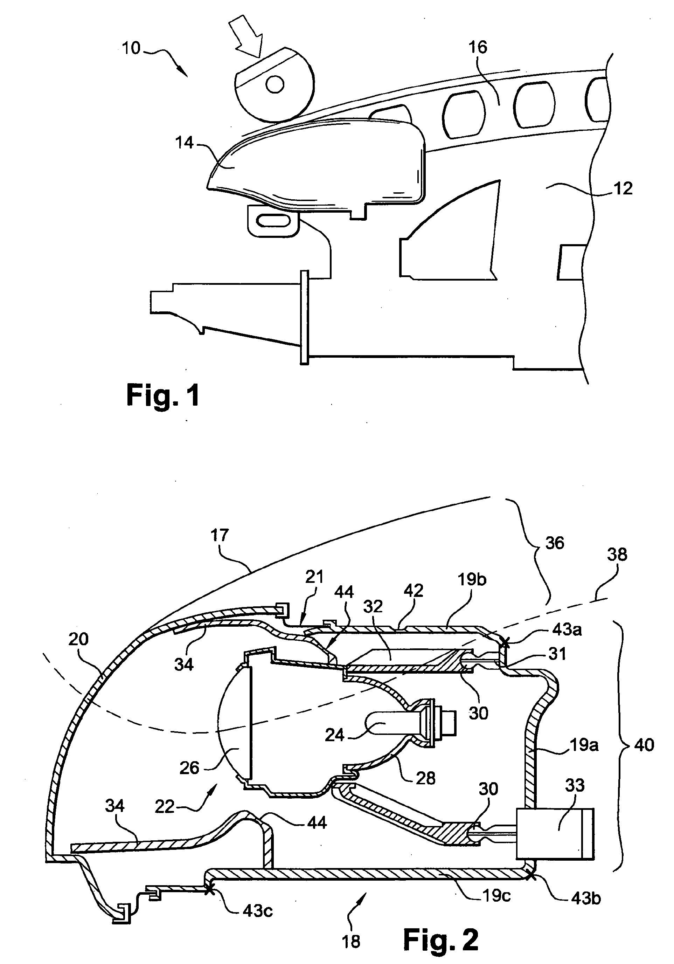

On a représenté sur la figure 1 un bloc avant d'un véhicule automobile 10. Ce bloc comprend une partie structurelle 12 du véhicule, un bloc optique 14 d'un seul tenant avec un support d'aile, le support d'aile comportant un absorbeur de chocs 16 arrangé sur un longeron supérieur du véhicule 10, de façon à amortir un choc, dans le cas où la tête d'un piéton heurterait la partie avant du véhicule automobile. Le bloc optique 14 et l'absorbeur 16 sont recouverts par l'aile 17 du véhicule, formant la carrosserie de celui-ci.

Le bloc optique 14, représenté plus en détail sur la figure 2, comprend un boîtier d'optique 18, réalisé en matière plastique et comprenant une paroi de fond 19a, deux parois latérales (non représentées), une paroi supérieure 19b et une paroi inférieure 19c, venues de moulage. Ce boîtier 18 est fermé par un vitrage d'optique 20 de façon à former un compartiment étanche. Il est relié au vitrage d'optique 20 par l'intermédiaire d'un joint souple 21, appliqué sur la périphérie du boîtier d'optique, à l'avant de celui-ci.

Le boîtier 18 contient les éléments fonctionnels de l'optique, tel que le module optique mobile 22, comportant une source lumineuse 24, telle qu'une ampoule de phare, destinée à former un feu de route ou un feu de croisement, une lentille 26 et un support 28. Le support 28 comprend des moyens de positionnement 30 de la source lumineuse 24, comme des bras 32, montés mobiles en rotation sur des rotules 31 reliées au boîtier d'optique 18, dont la position est réglable à l'aide d'un moteur 33.

Le boîtier d'optique 18 contient également un masque 34 permettant d'améliorer l'aspect de l'optique. Des modules optiques fixes de petite taille (non représentés sur les figures) peuvent être intégrés au masque 34. Le masque 34 est agencé dans le boîtier au-dessus et au-dessous du mobile optique mobile 22. Il comporte des strictions d'épaisseur 44 en plusieurs endroits, notamment dans sa partie supérieure, qui peuvent faire fonction d'amorces de rupture en cas de choc piéton.

Le bloc optique comprend une zone déformable 36 qui est la portion du bloc optique 14 située entre l'aile 17 et la ligne en pointillés 38, représentant la limite de la course accordée à la tête de piéton, cette ligne étant essentiellement parallèle à l'aile 17 et distante d'environ 35 mm de celle-ci. La zone déformable 36 autorise donc une course d'environ 35mm pour la tête du piéton, dans laquelle le piéton ne heurte aucun point dur.

Cette zone 36 comprend une partie du masque 34, une partie du module optique mobile 22 et une partie supérieure du boîtier d'optique 18, constituée par la paroi supérieure 19b.

Le boîtier optique 18 comprend également une partie inférieure 40 rigide, comprenant les parois latérales, la paroi de fond 19a et la paroi inférieure 19c.

Le module optique mobile 22 est relié à la partie inférieure 40 du boîtier optique, cette partie inférieure 40 comprenant également des moyens de fixation 43a, 43b, 43c, constitués par tout moyen adapté, du boîtier 18 à la partie structurelle 12, par exemple la face avant technique, du véhicule automobile 10.

La paroi supérieure 19b est d'épaisseur moindre que les parois 19a, 19c de la partie inférieure 40, ce qui est rendu possible par le fait que la partie inférieure assure les fonctions structurelles du boîtier. La paroi 19b comprend également une striction d'épaisseur 42, faisant fonction de zone de rupture programmée. Du fait de cette striction d'épaisseur et de sa finesse, la paroi supérieure 19b est déformable lorsqu'elle est soumise à une sollicitation équivalente à une sollicitation engendrée par un choc piéton, notamment un choc tête, contrairement à la partie inférieure 40.

Le joint souple 21 reliant le boîtier d'optique 18 et le vitrage d'optique 20 permet de compenser l'absence de moyens de fixation dans la partie supérieure 19b du boîtier d'optique au voisinage du vitrage. En effet, au lieu de fixer le boîtier 18 au plus près du vitrage 20, on fixe le vitrage directement sur la pièce de carrosserie pour garantir les jeux et affleurements entre le vitrage d'optique et la carrosserie et on rattrape à l'aide du joint souple les légers défauts de positionnement du boîtier d'optique et du vitrage l'un par rapport à l'autre.

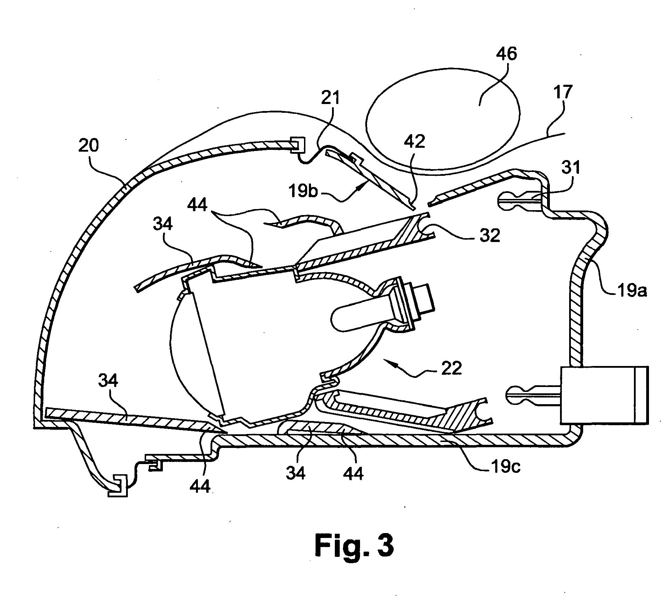

Un bloc optique conçu de cette façon est apte à traiter le choc piéton, comme cela est illustré par la figure 3. En effet, lors d'un choc tête, la tête 46 du piéton déforme l'aile 17, qui s'affaisse jusqu'à entrer en contact avec la paroi supérieure 19b du boîtier d'optique 18. Cette paroi 19b, soumise à l'action de la tête 46 du piéton par l'intermédiaire de l'aile 17, se déforme en pliant au niveau de sa striction d'épaisseur 42, et se rompt ensuite dans la partie 42.

Avant sa rupture, la paroi 19b exerce une pression sur le masque 34, qui se déforme puis se rompt également dans la zone de la striction d'épaisseur 44, et sur le module optique mobile 22, escamotable pour ne pas gêner la course de la tête du piéton 46, et dont les bras 32 se dégrafent des rotules 31 reliées à la partie inférieure 40 du boîtier 18. De cette façon, le module optique mobile 22 tombe au fond du boîtier 18 et dégage la zone de déformation, de sorte que la tête n'est pas arrêtée dans la zone déformable par le module optique mobile 22.

Ainsi, un piéton dont la tête heurte le véhicule dans une zone au voisinage du bloc optique dispose d'une course suffisamment importante pour, qu'avant que la tête ne rencontre un point dur du véhicule, elle ait décéléré de façon progressive grâce à la rencontre avec différents éléments fusibles ou déformables. Les risques de blessure du piéton sont donc fortement diminués grâce au bloc optique selon l'invention.

On notera que l'invention n'est pas limitée au mode de réalisation décrit et peut recevoir toute modification désirable, sans sortir pour cela du cadre de l'invention.

En variante, la partie supérieure est réalisée en un matériau souple, différent du matériau dans lequel est réalisée la partie rigide, cette partie supérieure étant déformable élastiquement pour les sollicitations équivalentes à celles du choc piéton. Une telle partie souple peut par exemple être constituée à l'aide d'un joint souple 21 fixé à la paroi de fond 19a du boîtier d'optique 18.

Il est également envisageable de prévoir sous la paroi inférieure 42 un dégagement formant la zone déformable.

La course prévue pour la tête du piéton par la zone déformable peut également être différente de 35 mm. Elle est toutefois de préférence comprise entre 30 et 40mm.

## Revendications

1. Bloc optique (14) de véhicule automobile (10), comprenant un boîtier d'optique (18) comportant une partie inférieure rigide (40), et une zone déformable (36), cette zone comportant une partie supérieure comportant la paroi supérieure (19b) du boîtier d'optique (18), déformable lorsqu'elle est soumise à une sollicitation équivalente à une sollicitation engendrée par un choc piéton, **caractérisé en ce que** la paroi supérieure comprend au moins une zone d'amorce de rupture de la paroi supérieure (19b), notamment une striction d'épaisseur (42).

2. Bloc optique (14) selon l'une quelconque des revendications précédentes, dans lequel la partie supérieure est réalisée en un matériau souple

3. Bloc optique (14) selon l'une quelconque des revendications précédentes, dans lequel la partie supérieure (19b) est d'épaisseur moindre que la partie inférieure (40).

4. Bloc optique (14) selon l'une quelconque des revendications précédentes, dans lequel la zone déformable (36) est conformée pour autoriser une course d'une tête d'un piéton sur une distance comprise entre 20 et 50 mm, de préférence 30 à 40 mm.

5. Bloc optique (14) selon l'une quelconque des revendications précédentes, dans lequel la zone déformable (36) comprend un dégagement disposé sous la partie supérieure (19b) du boîtier d'optique (18).

6. Bloc optique (14) selon l'une quelconque des revendications 1 à 4, dans lequel la zone déformable (36) comprend au moins une pièce fusible (34) disposée sous la partie supérieure (19b) du boîtier d'optique (18).

7. Bloc optique (14) selon la revendication précédente, dans lequel la zone déformable comprend un masque (34), destiné à améliorer l'aspect du bloc optique et comportant de préférence au moins une zone d'amorce de rupture (44) dans sa partie supérieure.

8. Bloc optique (14) selon l'une quelconque des revendications précédentes, dans lequel la zone déformable (36) comprend au moins une pièce escamotable (22).

9. Bloc optique (14) selon l'une quelconque des revendications précédentes, comprenant un module optique mobile (22), comportant une source lumineuse de forte puissance (24) et un support (28) comportant des moyens réglables de positionnement (30) de la source lumineuse (24), le module optique mobile (22) étant relié à la partie inférieure (40) du boîtier d'optique (18).

10. Bloc optique (14) selon l'une quelconque des revendications précédentes, dans lequel le boîtier d'optique (18) comprend au moins un moyen de fixation (43a, 43b, 43c) à une partie structurelle du véhicule, chaque moyen de fixation étant situé dans la partie inférieure (40) du boîtier d'optique.

11. Bloc optique (14) selon la revendication précédente, dans lequel le boîtier d'optique (18) est relié à un vitrage d'optique (20) par l'intermédiaire d'un joint souple (21) appliqué sur la périphérie du boîtier d'optique, à l'avant de celui-ci.

12. Bloc optique (14) selon l'une quelconque des revendications précédentes, dans lequel le boîtier d'optique (18) comprend des moyens de renfort de sa partie inférieure, notamment un bras de soutien de la partie inférieure du boîtier d'optique.

13. Bloc optique (14) selon l'une quelconque des revendications précédentes, d'un seul tenant avec un support d'aile, le support d'aile comprenant des moyens d'absorption (16) destinés à être agencés au voisinage d'un longeron supérieur du bloc avant du véhicule automobile.

## Claims

1. Headlight unit (14) for a motor vehicle (10), the unit comprising a light housing (18) having a rigid bottom portion (40), and a deformable zone (36), said zone including a top portion having the top wall (19b) of the light housing (18), and deformable when it is subjected to stress equivalent to the stress generated by a pedestrian impact, the headlight unit being **characterized in that** the top wall includes at least one break starter zone for the top wall (19b), in particular a constriction in thickness (42).

2. Headlight unit (14) according to the preceding claim, wherein the top portion is made of a flexible material.

3. Headlight unit (14) according to either preceding claim, wherein the top portion (19b) is of smaller thickness than the bottom portion (40).

4. Headlight unit (14) according to any preceding claim, wherein the deformable zone (36) is shaped to allow a pedestrian's head to move over a stroke lying in the range 20 mm to 50 mm, preferably 30 mm to 40 mm.

5. Headlight unit (14) according to any preceding claim, wherein the deformable zone (36) includes a setback arranged under the top portion (19b) of the light housing (18).

6. Headlight unit (14) according to any one of claims 1 to 4, wherein the deformable zone (36) includes at least one fusible part (34) arranged under the top portion (19b) of the light housing (18).

7. Headlight unit (14) according to the preceding claim, wherein the deformable zone includes a mask (34) designed to improve the appearance of the headlight unit and preferably including at least one break starter zone (44) in its top portion.

8. Headlight unit (14) according to any preceding claim, wherein the deformable zone (36) includes at least one retractable part (22).

9. Headlight unit (14) according to any preceding claim, including a movable light module (22) including a high power light source (24) and a support (28) having means (30) for adjustably positioning the light source (24), the movable light module (22) being connected to the bottom portion (40) of the light housing (18).

10. Headlight unit (14) according to any preceding claim, wherein the light housing (18) includes at least one fastener means (43a, 43b, 43c) for fastening to a structural portion of the vehicle, each fastener means being situated in the bottom (40) of the light housing.

11. Headlight unit (14) according to the preceding claim, wherein the light housing (18) is connected to a headlight glass (20) via a flexible gasket (21) that is applied around the periphery of the light housing, at the front thereof.

12. Headlight unit (14) according to any preceding claim, wherein the light housing (18) includes means for reinforcing its bottom portion, in particular an arm for supporting the bottom portion of the light housing.

13. Headlight unit (14) according to any preceding claim, made integrally with a fender support, the fender support including absorber means (16) designed to be arranged in the vicinity of a top length member of the front unit of the motor vehicle.

## Patentansprüche

1. Beleuchtungseinheit (14) für Kraftfahrzeug (10), die ein Optikgehäuse (18) aufweist, das einen unteren starren Teil (40) und einen verformbaren Bereich (36) aufweist, wobei dieser Bereich einen oberen Teil aufweist, der die obere Wand (19b) des Optikgehäuses (18) enthält, der verformbar ist, wenn er einer Belastung ausgesetzt wird, die gleich einer Belastung ist, die von einem Fußgängeraufprall erzeugt wird, **dadurch gekennzeichnet, dass** die obere Wand mindestens einen Sollbruchstellenbereich der oberen Wand (19b) aufweist, insbesondere eine Stärkeneinschnürung (42).

2. Beleuchtungseinheit (14) nach dem vorhergehenden Anspruch, bei der der obere Teil aus einem biegsamen Werkstoff hergestellt ist.

3. Beleuchtungseinheit (14) nach einem der vorhergehenden Ansprüche, bei der der obere Teil (19b) eine geringere Stärke hat als der untere Teil (40).

4. Beleuchtungseinheit (14) nach einem der vorhergehenden Ansprüche, bei der der verformbare Bereich (36) ausgebildet ist, um einen Weg eines Kopfs eines Fußgängers über eine Entfernung zwischen 20 und 50 mm, vorzugsweise 30 bis 40 mm zu gestatten.

5. Beleuchtungseinheit (14) nach einem der vorhergehenden Ansprüche, bei der der verformbare Bereich (36) eine Aussparung aufweist, die unter dem oberen Teil (19b) des Optikgehäuses (18) angeordnet ist.

6. Beleuchtungseinheit (14) nach einem der Ansprüche 1 bis 4, bei der der verformbare Bereich (36) mindestens einen verflüssigbaren Teil (34) aufweist, der unter dem beren Teil (19 b) des Optikgehäuses (18) angeordnet ist.

7. Beleuchtungseinheit (14) nach dem vorhergehenden Anspruch, bei der der verformbare Bereich eine Maske (34) aufweist, die dazu bestimmt ist, das Aussehen der Beleuchtungseinheit zu verbessern, und die vorzugsweise mindestens einen Sollbruchstellenbereich (44) in ihrem oberen Teil enthält.

8. Beleuchtungseinheit (14) nach einem der vorhergehenden Ansprüche, bei der der verformbare Bereich (36) mindestens einen versenkbaren Teil (22) aufweist.

9. Beleuchtungseinheit (14) nach einem der vorhergehenden Ansprüche, die ein bewegliches Optikmodul (22) aufweist, das eine Lichtquelle (24) mit hoher Leistung und einen Träger (28) aufweist, der einstellbare Positionierungsmittel (30) der Lichtquelle (24) aufweist, wobei das bewegliche Optikmodul (22) mit dem unteren Teil (40) des Optikgehäuses (18) verbunden ist.

10. Beleuchtungseinheit (14) nach einem der vorhergehenden Ansprüche, bei der das Optikgehäuse (18) mindestens ein Mittel zum Befestigen (43a, 43b, 43c) an einem Strukturteil des Fahrzeugs aufweist, wobei sich jedes Befestigungsmittel in dem unteren Teil (40) des Optikgehäuses befindet.

11. Beleuchtungseinheit (14) nach dem vorhergehenden Anspruch, bei der das Optikgehäuse (18) mit einer Optikverglasung (20) über eine biegsame Verbindung (21), die an dem Umfang des Optikgehäuses an dessen Vorderseite angelegt ist, verbunden ist.

12. Beleuchtungseinheit (14) nach einem der vorhergehenden Ansprüche, bei der das Optikgehäuse (18) Verstärkungsmittel seines unteren Teils aufweist, insbesondere einen Stützarm des unteren Teils des Optikgehäuses.

13. Beleuchtungseinheit (14) nach einem der vorhergehenden Ansprüche, aus einem einzigen Stück mit einem Flügelträger, wobei der Flügelträger Absorptionsmittel (16) aufweist, die dazu bestimmt sind, in der Nähe eines oberen Längsbalkens des vorderen Blocks des Kraftfahrzeugs eingerichtet zu werden.
